# EUROPEAN PATENT APPLICATION

(11) **EP 4 793 874 A1**
(43) Date of publication of application: **19.08.2026**
(21) Application number: 24890674.5
(22) Date of filing: 12.11.2024
(51) Int. Cl.: G06T 1/20, G06T 1/60

(54) **GEOMETRY PROCESSING METHOD AND APPARATUS, DEVICE, STORAGE MEDIUM, AND PROGRAM PRODUCT**

(30) Priority: 17.11.2023 CN 202311533612
(71) Applicant: Moore Threads Technology Co., Ltd., Beijing 100036 (CN)
(72) Inventor: LOU, Yu, Beijing 100036 (CN); YANG, Lei, Beijing 100036 (CN); SUN, Tong, Beijing 100036 (CN); ZHU, Xinzhao, Beijing 100036 (CN)
(74) Representative: Lavoix
(86) International application number: PCT/CN2024/131611
(87) International publication number: WO 2025/103319

(57) **Abstract**

The present application discloses a geometry processing method and apparatus, a device, a storage medium, and a program product. The geometry processing method comprises: each primitive distribution unit acquires primitive cluster data in a geometry data stream, wherein the primitive cluster data comprises a first label used for determining the sequence of the primitive cluster data in the geometry data stream; the primitive distribution unit further divides the primitive cluster data into primitive group data, and distributes the primitive group data to corresponding geometry processing pipelines; the geometry processing pipelines process the primitive group data to obtain primitive group processing results, and output the primitive group processing results to a corresponding merging arbiter; and the merging arbiter performs merging processing on the primitive group processing results on the basis of a second label, so as to obtain geometry output data corresponding to the primitive cluster data.

## Description

### CROSS-REFERENCE TO RELATED APPLICATIONS

This application is filed based on and claims priority to Chinese patent application No. 202311533612.2 on November 17, 2023 and entitled "METHOD AND APPARATUS FOR GEOMETRY PROCESSING, DEVICE, AND STORAGE MEDIUM", the disclosure of which is hereby incorporated by reference in its entirety.

### TECHNICAL FIELD

The application relates to the technical field of graphics processing, and in particular to a method and apparatus for geometry processing, a device, a storage medium and a program product.

### BACKGROUND

A Graphics Processing Unit (GPU) is a dedicated graphics reproducing apparatus used for processing and displaying computerized graphics. The GPU is constructed in a highly parallel structure, this structure provides more efficient processing for a series of complex algorithms than a typical general-purpose Central Processing Unit (CPU). For example, the complex algorithms may correspond to representations of two-dimensional (2D) or three-dimensional (3D) computerized graphics. The GPU usually includes a front-end Geometry Processing Pipeline (GPP) and a back-end pixel processing pipeline, there are relatively large requirements on performance of the GPP in relevant application scenarios, while design of the GPP in the related art is difficult to provide higher geometry processing performance, which becomes a bottleneck for the entire graphics processing.

### SUMMARY

In view of this, embodiments of the application provide at least a method and apparatus for geometry processing, a device, a storage medium and a program product.

Technical solutions of the embodiments of the application are implemented as follows.

According to an aspect, an embodiment of the application provides a method for geometry processing, the method is applied to a GPU, the GPU includes at least two Graphics Pipelines Clusters (GPCs), each of the at least two GPCs includes a primitive distribution unit, at least two GPPs and a merging arbiter, the method includes the following operations. The primitive distribution unit acquires Primitive Cluster (PC) data from a geometry data stream, here the PC data includes a first label used for determining an order of the PC data in the geometry data stream. The primitive distribution unit splits the PC data into Primitive Group (PG) data, and the primitive distribution unit distributes the PG data to the GPPs, here the PG data includes a second label used for determining an order of the PG data in the PC data. The GPPs process the PG data to obtain PG processing results, and the GPPs output the PG processing results to the merging arbiter. The merging arbiter merges the PG processing results based on the second label, to obtain geometry output data that corresponds to the PC data and is in a second order, here the geometry output data contains the first label corresponding to the PC data, and the first label is used for determining a first order among the geometry output data output by each of the GPCs.

In some embodiments, the operation of acquiring, by the primitive distribution unit, the PC data from the geometry data stream may include the following operations. The primitive distribution unit reads the PC data to be processed by the GPC, from the geometry data stream.

In some embodiments, the operation of reading, by the primitive distribution unit, the PC data to be processed by the GPC, from the geometry data stream may include the following operations. The primitive distribution unit reads the geometry data stream. Data that is not to be processed by a current GPC is discarded from the geometry data stream based on a preset PC acquisition strategy, to obtain the PC data to be processed by the GPC.

In some embodiments, the operation of reading, by the primitive distribution unit, the PC data to be processed by the GPC, from the geometry data stream may include the following operations. An address range of the PC data to be processed by the GPC is determined based on a preset PC acquisition strategy. The PC data to be processed by the GPC is read from the geometry data stream based on the address range.

In some embodiments, the GPU may further include a global distribution unit, and the method may further include the following operations. The global distribution unit reads the geometry data stream. The global distribution unit determines the PC data to be processed by each of the GPCs, from the geometry data stream based on a preset PC acquisition strategy, and the global distribution unit distributes the PC data to the GPC. Correspondingly, the operation of acquiring, by the primitive distribution unit, the PC data from the geometry data stream may include the following operations. The primitive distribution unit receives the PC data to be processed by the GPC which is sent by the global distribution unit.

In some embodiments, the GPU may further include at least one pixel processing pipeline, and the method may further include the following operations. Each of the GPCs buffers, based on the first label, the geometry output data corresponding to the PC data into a buffering unit corresponding to the GPC. The pixel processing pipeline sequentially reads, based on the first label, from buffering units corresponding to the at least two GPCs respectively, the geometry output data corresponding to each of the GPCs in the first order.

In some embodiments, each of the GPCs may further include a chunker, and the operation of buffering, by each of the GPCs based on the first label, the geometry output data corresponding to the PC data into the buffering unit corresponding to the GPC may include the following operations. The chunker sequentially distributes, based on the first label, the geometry output data corresponding to each of the GPCs, and the chunker buffers the geometry output data into the buffering unit corresponding to the GPC. The operation of distributing the geometry output data corresponding to each of the GPCs, and buffering the geometry output data into the buffering unit corresponding to the GPC may include the following operations. The chunker sequentially determines, based on the second order, a tile corresponding to each primitive data in the geometry output data. The chunker writes each primitive data in the geometry output data into a polygon list of the tile corresponding to the primitive data, in the buffering unit corresponding to the GPC.

In some embodiments, in case that at least one target primitive data belonging to a target tile is present in the geometry output data, a polygon list of the target tile includes the first label of the geometry output data and each target primitive data belonging to the target tile in the geometry output data. An order of each target primitive data in the polygon list is the same as the second order.

In some embodiments, the operation of sequentially reading, by the pixel processing pipeline based on the first label, from the buffering units corresponding to the at least two GPCs respectively, the geometry output data corresponding to each of the GPCs in the first order may include the following operations. In the buffering units corresponding to the at least two GPCs respectively, the pixel processing pipeline traverses the first label in each of polygon lists corresponding to a target tile, and the pixel processing pipeline extracts primitive data corresponding to a target first label from a polygon list corresponding to the target first label, until there is no primitive data in each of the polygon lists. The target first label is determined based on an order of the first label in a header of each of the polygon lists.

According to another aspect, an embodiment of the application provides a GPU, the GPU includes at least two GPCs, each of the at least two GPCs includes a primitive distribution unit, at least two GPPs and a merging arbiter. The primitive distribution unit is configured to acquire PC data from a geometry data stream, here the PC data includes a first label used for determining an order of the PC data in the geometry data stream. The primitive distribution unit is further configured to split the PC data into PG data, and distribute the PG data to the GPPs, here the PG data includes a second label used for determining an order of the PG data in the PC data. The GPPs are configured to process the PG data to obtain PG processing results, and output the PG processing results to the merging arbiter. The merging arbiter is configured to merge the PG processing results based on the second label, to obtain geometry output data that corresponds to the PC data and is in a second order, here the geometry output data contains the first label corresponding to the PC data, and the first label is used for determining a first order of the geometry output data output by each of the GPCs.

According to yet another aspect, an embodiment of the application provides a computer device, the computer device includes a memory and a processor, the memory has stored thereon a computer program executable on the processor, and part or all of operations of the above method are implemented when the program is executed by the processor.

According to yet another aspect, an embodiment of the application provides a computer-readable storage medium, the computer-readable storage medium has stored thereon a computer program, part or all of operations of the above method are implemented when the computer program is executed by a processor.

According to yet another aspect, an embodiment of the application provides a computer program product, the computer program product includes a computer program or instructions, part or all of operations of the above method are implemented when the computer program or instructions are executed by a processor.

In the embodiments of the application, the PC data to be processed by each of the at least two GPCs itself is acquired from the geometry data stream by each of the at least two GPCs, thereby achieving first splitting of the geometry data stream, and a first level of parallel processing is achieved by the at least two GPCs; meanwhile, within each of the GPCs, the primitive distribution unit splits the PC data and distributes the split data to at least two GPPs, thereby achieving second splitting of the geometry data stream, and a second level of parallel processing is performed by the at least two GPPs. Therefore, according to the application, with two levels of data splitting and parallel processing, a degree of parallelism (DOP) at a geometry processing stage may be improved greatly, thereby improving geometry processing performance of the GPU; furthermore, since the PC data includes the first label used for determining an order of the PC data in the geometry data stream, it may facilitate determining the first order among the geometry output data output by each of the GPCs; since the PG data includes the second label used for determining an order of the PG data in the PC data, it may facilitate rearranging an order of the processed PG data, to restore an order of the processed PG data in the PC data.

It should be understood that the above general descriptions and the following detailed descriptions are exemplary and explanatory only, and are not intended to limit the technical solutions of the application.

### BRIEF DESCRIPTION OF THE DRAWINGS

Here, the drawings are incorporated into the description and constitute a part of the description, these drawings show embodiments consistent with the application, and are intended to explain the technical solutions of the application together with the description.
FIG. 1 is a first schematic flowchart of implementation of a method for geometry processing according to an embodiment of the application.
FIG. 2 is a second schematic flowchart of implementation of a method for geometry processing according to an embodiment of the application.
FIG. 3 is a third schematic flowchart of implementation of a method for geometry processing according to an embodiment of the application.
FIG. 4 is a fourth schematic flowchart of implementation of a method for geometry processing according to an embodiment of the application.
FIG. 5 is a schematic diagram of a system architecture that includes a single GPP corresponding to one or more pixel processing pipelines according to an embodiment of the application.
FIG. 6 is a schematic diagram of a system architecture that uses parallel GPPs corresponding to one or more pixel processing pipelines according to an embodiment of the application.
FIG. 7 is a schematic diagram of task distribution and merging of GPPs according to an embodiment of the application.
FIG. 8 is a first schematic diagram of GPU's GPPs that are parallel in multiple levels according to an embodiment of the application.
FIG. 9 is a schematic diagram of data partitioning and distribution based on a round-robin mode according to an embodiment of the application.
FIG. 10 is a schematic diagram of data partitioning and distribution based on a load balancing mode within a GPC and based on a round-robin mode between GPCs according to an embodiment of the application.
FIG. 11 is a second schematic diagram of another GPU's GPPs that are parallel in multiple levels according to an embodiment of the application.
FIG. 12 is a schematic diagram of compositional structures of a GPU according to an embodiment of the application.
FIG. 13 is a schematic diagram of a hardware entity of a computer device according to an embodiment of the application.

### DETAILED DESCRIPTION

In order to make the purpose, technical solutions and advantages of the application more apparent, the technical solutions of the application will be further described in detail below with reference to the drawings and embodiments. The described embodiments should not be considered as limiting the application, and all other embodiments obtained by those of ordinary skill in the art without paying any creative work should fall within the scope of protection of the application.

In the following descriptions, reference is made to "some embodiments", which describe a subset of all possible embodiments; however, it may be understood that "some embodiments" may be the same or different subsets of all possible embodiments and may be combined with each other without conflict. Terms "first/second/third" involved are only intended to distinguish similar objects and do not represent a specific order of the objects. It may be understood that "first\second\third" may be interchanged in a specific order or order if allowable, such that the embodiments of the application described here may be implemented in an order besides that illustrated or described here.

Unless otherwise defined, all technical and scientific terms used in the application have the same meaning as those usually understood by those skilled in the art to which the application belongs. The terms used in the application are only for the purpose of describing the application, and are not intended to limit the application.
(1) Tile Based Rendering (TBR): this solution may split a picture into image tiles (also referred to as tiles), such that each tile may adapt to an on-chip cache. For example, if the on-chip cache may store 512kB of data, the picture may be split into tiles, such that pixel data contained in each tile is less than or equal to 512kB. In this way, a scene may be rendered by splitting the picture into tiles that may be rendered into the on-chip cache, rendering each tile of the scene into the on-chip cache individually, storing the rendered tiles from the on-chip cache into a frame buffer, and repeating the rendering and storage processes for each tile of the picture. Therefore, the picture may be rendered tile by tile, to render each tile of the scene. It may be understood that the TBR solution belongs to a mode of delayed reproduction of graphics and is widely used in a mobile device due to its characteristics of low power consumption; however, the TBR solution also has a certain application in a desktop-grade Graphics Processing Unit (GPU) and a server-grade GPU.
(2) Chunker: it is a last module at a front end of the TBR, used for performing partitioning of a screen, recording graphics data covering the tile, and writing generation information such as tile information (Primitive List), vertex information (Vertex Data) or the like into a memory of a system. The Primitive List is a fixed-length array with a length of "tile", each element in the array is a linked list where pointers of all triangles intersected with the current tile are stored, the pointers point to the Vertex Data, and the Vertex Data stores the vertex and attribute data of the vertex.

In a rendering process of a modern GPU, the GPU needs to read vertex information first from a vertex cache that has been configured by a software, and then complete output by passing the information through a front end (vertex shader, tessellation, geometry shader, and many fixed-function geometry processing and chunking functions) that is a Geometry Processing Pipeline (GPP) and a back end that is a pixel processing pipeline, etc. Output after data is processed by the GPP will be used as input of the pixel processing pipeline.

In an actual application, some applications or games may result in very heavy workloads of the GPP, for example, since the applications or games may have a large number of primitives, and turn on tessellation, complex vertex shader and geometry shader, all of which require a large processing throughput of the GPP. Therefore, a graphics processing pipeline using a single GPP in the related art cannot meet performance requirements of the entire graphics processing task, and the GPP becomes a performance bottleneck.

The embodiments of the application provide a method for geometry processing, and the method may be performed by a processor of a computer device. The computer device may refer to a device with a data processing capability, such as a server, a laptop, a tablet computer, a desktop computer, a smart television (TV), a set-top box, a mobile device (such as a mobile phone, a portable video player, a Personal Digital Assistant (PDA), a dedicated messaging device, a portable gaming device), etc.

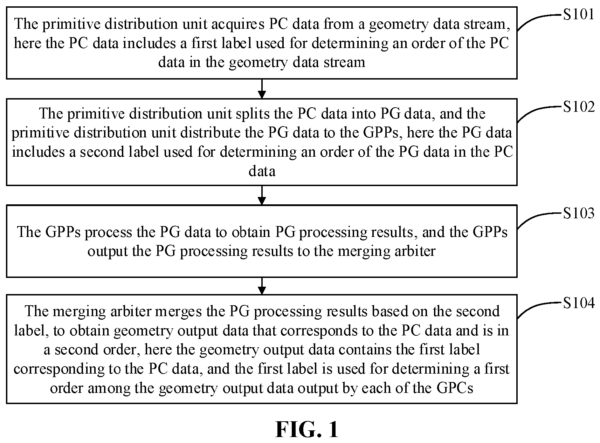

FIG. 1 is a first schematic flowchart of implementation of a method for geometry processing according to an embodiment of the application, and as shown in FIG. 1, the method includes the following operations S101 to S104.

In operation S101, the primitive distribution unit acquires Primitive Cluster (PC) data from a geometry data stream, here the PC data includes a first label used for determining an order of the PC data in the geometry data stream.

In some embodiments, a GPU includes at least two Graphics Pipelines Clusters (GPCs) at present. Here, each of the at least two GPCs includes a primitive distribution unit, at least two GPPs and a merging arbiter. Physically speaking, units in the same GPC are physically located in the same region of a chip. That is, different GPCs may be distributed in different positions of the chip.

In some embodiments, the at least two GPCs included in the above GPU may use the same cluster configuration, or may use different cluster configurations. The cluster configuration here is at least used for determining a number of GPPs included in the GPC. Exemplarily, in case that the same cluster configuration is used, each of different GPCs includes the same number of GPPs, and the number of the GPPs is at least two. In case that different cluster configurations are used, different GPCs may include different numbers of GPPs; there is at least one GPC in the GPU, and there are at least two GPPs in each GPC. In some cases, the GPU may further include a GPC with one GPP.

In the embodiment of the application, the above geometry data stream is original input data of the GPU. For the geometry data stream, since the GPU includes at least two parallel GPCs, the primitive distribution unit located in each of the GPCs may acquire geometry data to be processed by the GPC itself, that is, the PC data from the geometry data stream. Here, a mode of acquiring the above PC data may be that the PC data is read by the primitive distribution unit in the GPC actively from the geometry data stream, or may be that the PC data is received by the primitive distribution unit in the GPC passively, which is not limited in the current embodiment.

It may be understood that the PC data acquired by the primitive distribution units in different GPCs are different/not overlapped, and the PC data acquired by the primitive distribution units in the GPCs may be combined to restore the original geometry data stream.

In some embodiments, the PC data includes the first label used for determining an order of the PC data in the geometry data stream. Exemplarily, the original geometry data stream may include PC data 1 to N arranged in order, here the first label corresponding to the PC data 1 may be set as "1", ..., and the first label corresponding to the PC data N may be set as "N". Therefore, after the GPC acquires the PC data to be processed by the GPC itself, the GPC may determine a position of the PC data to be processed currently in the original geometry data stream based on the first label in current PC data. The above exemplary description of the first label is only for the purpose of facilitating understanding the current implementation flow, and does not limit the specific implementation.

It should be noted that the primitive distribution unit here is described from the perspective of any one of the at least two GPCs in the GPU.

In the above operation S101, each of the at least two GPCs of the GPU acquires the PC data to be processed by each of the at least two GPCs itself from the geometry data stream, which is actually first splitting of the geometry data stream, and a first level of parallel processing is performed by the at least two GPCs, object of the parallel processing is the PC data to be processed by each of the GPCs.

In operation S102, the primitive distribution unit splits the PC data into Primitive Group (PG) data, and the primitive distribution unit distributes the PG data to the GPPs, here the PG data includes a second label used for determining an order of the PG data in the PC data.

In some embodiments, after the primitive distribution unit in the GPC obtains the PC data to be processed by the current GPC, the primitive distribution unit needs to perform further division, to split the PC data into the PG data. At least two parallel GPPs are also included within the GPC, the primitive distribution unit is connected to the GPPs, and after the primitive distribution unit splits the PC data into the PG data, the primitive distribution unit distributes the obtained PG data to at least two GPPs following it. It may be understood that the PG data received by different GPPs are not overlapped, and do not result in waste of resources.

In some embodiments, the PG data includes the second label used for determining an order of the PG data in the PC data. Exemplarily, the PC data obtained by the primitive distribution unit in the GPC may be split into PG data 1 to N arranged in order, here the second label corresponding to the PG data 1 may be set as "1", ..., and the second label corresponding to the PG data N may be set as "N". Therefore, after the GPPs process the PG data received by them respectively, the GPPs may determine a position of the processed PG data in original PC data based on the second label in current PG data, thereby facilitating restoring the order of the PC data output by each of the GPPs subsequently. The above exemplary description of the second label is only for the purpose of facilitating understanding the current implementation flow, and does not limit the specific implementation.

In some embodiments, after the primitive distribution unit splits the PC data to obtain PG data, the primitive distribution unit may sequentially send the obtained PG data to the GPPs following it, in a round-robin sending mode. Exemplarily, after the primitive distribution unit obtains N PG data, if there are 3 GPPs, the primitive distribution unit may distribute the (1+3n)-th PG data to the first GPP, may distribute the (2+3n)-th PG data to the second GPP, and may distribute the 3(1+n)-th PG data to the third GPP, here n is 0, 1, 2, ...

In some other embodiments, after the primitive distribution unit splits the PC data to obtain PG data, the primitive distribution unit may first acquire load information of the GPPs following it, and may distribute the PG data to the GPP with a low load based on the load information corresponding to the GPPs, to achieve load balancing between at least two parallel GPPs.

The above operation S102 is actually second splitting of the geometry data stream, and a second level of parallel processing is performed by the at least two GPPs, object of the parallel processing is the PG data received by each of the GPPs.

In operation S103, the GPPs process the PG data to obtain PG processing results, and the GPPs output the PG processing results to the merging arbiter.

Here, at least two parallel GPPs in each of the GPCs process the PG data received by the at least two parallel GPPs respectively in parallel, to obtain the PG processing results. It may be understood that each of the PG processing results includes the processed PG data corresponding to a respective one of the GPPs. Here, the processed PG data further includes the second label.

In the embodiment of the application, the merging arbiter is connected to the GPPs and is configured to receive the PG processing results, that is, receive the processed PG data output by each of the GPPs.

In operation S104, the merging arbiter merges the PG processing results based on the second label, to obtain geometry output data that corresponds to the PC data and is in a second order, here the geometry output data contains the first label corresponding to the PC data, and the first label is used for determining a first order among the geometry output data output by each of the GPCs.

In some embodiments, since the at least two GPPs perform processing in parallel, while considering difference in processing performance of different GPPs and difference in processing times of different PG data, then in the process of outputting the processed PG data by the GPPs to the merging arbiter, it cannot ensure that an order of outputting the processed PG data is the same as the order of the PG data in the original PC data. Based on this, for the processed PG data output by the at least two GPPs, the merging arbiter may rearrange an order of the obtained processed PG data output based on the second label included in each processed PG data respectively, to restore the order of the processed PG data in the PC data.

Here, the above geometry output data in the second order is the processed PG data whose order has been restored.

Exemplarily, after the PC data to be processed by the current GPC is split into first to seventh PG data, the first, third and fourth PG data are distributed to the first GPP, to be processed to obtain the processed first, third and fourth PG data; the second, fifth, sixth and seventh PG data are distributed to the second GPP, to be processed to obtain the processed second, fifth, sixth and seventh PG data. The merging arbiter restores the order of each processed PG data according to the second label carried by each processed PG data, and the obtained geometry output data in the second order includes the processed first to seventh PG data. It may be understood that the above geometry output data in the second order is actually the processed output data of the current GPC for the PC data.

In the embodiment of the application, the geometry output data in the second order corresponding to the PC data further includes the first label corresponding to the PC data. Therefore, for the geometry output data in the second order output by each of the at least two GPCs in the GPU, the first order among the geometry output data output by each of the GPCs may be determined based on the first label.

In the embodiment of the application, the PC data to be processed by each of the at least two GPCs itself is acquired from the geometry data stream by each of the at least two GPCs, thereby achieving first splitting of the geometry data stream, and a first level of parallel processing is achieved by the at least two GPCs; meanwhile, within each of the GPCs, the primitive distribution unit splits the PC data and distributes the split data to at least two GPPs, thereby achieving second splitting of the geometry data stream, and a second level of parallel processing is performed by the at least two GPPs. Therefore, according to the application, with two levels of data splitting and parallel processing, a degree of parallelism (DOP) at a geometry processing stage may be improved greatly, thereby improving geometry processing performance of the GPU; furthermore, since the PC data includes the first label used for determining an order of the PC data in the geometry data stream, it may facilitate determining the first order among the geometry output data output by each of the GPCs; since the PG data includes the second label used for determining an order of the PG data in the PC data, it may facilitate rearranging an order of the processed PG data, to restore an order of the processed PG data in the PC data.

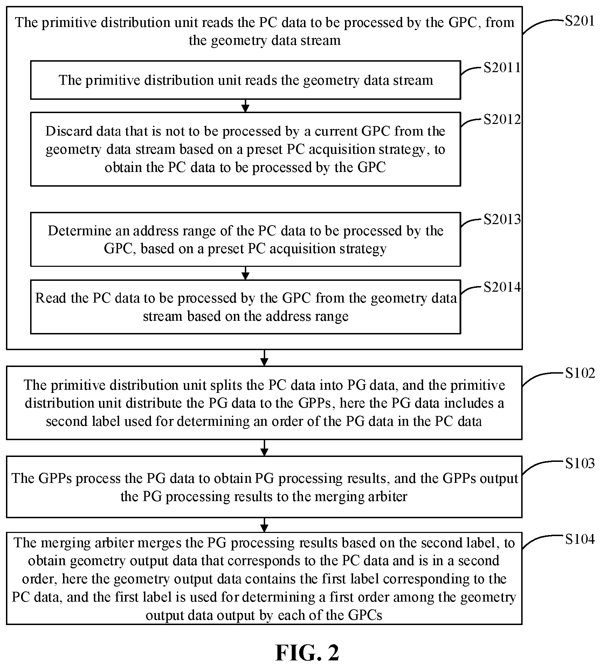

FIG. 2 is a second schematic flowchart of implementation of a method for geometry processing according to an embodiment of the application, and the method may be performed by a processor of a computer device. Based on FIG. 1, the operation S101 in FIG. 1 may be updated as an operation S201, which will be described in combination with operations shown in FIG. 2.

In operation S201, the primitive distribution unit reads the PC data to be processed by the GPC, from the geometry data stream.

In the current embodiment, the PC data to be processed by the GPC to which the primitive distribution unit belongs currently, may be actively acquired by the primitive distribution unit from the geometry data stream. For the primitive distribution units located in different GPCs, the PC data to be processed by the GPCs to which at least two primitive distribution units belong currently, may be acquired by the at least two primitive distribution units from the geometry data stream respectively through a pre-agreed acquisition rule (that is, a PC acquisition strategy described later), and the PC data corresponding to the GPCs are not overlapped.

In some embodiments, the primitive distribution unit may first acquire all the geometry data streams and discard data that is not to be processed by the GPC to which the primitive distribution unit belongs, and then may obtain the PC data to be processed by the current GPC. That is, the above operation of reading, by the primitive distribution unit, the PC data to be processed by the GPC, from the geometry data stream may be achieved through the following operations S2011 and S2012.

In operation S2011, the primitive distribution unit reads the geometry data stream.

In the embodiment of the application, the geometry data stream includes multiple to-be-split geometry data, and each of the multiple to-be-split geometry data is read by the primitive distribution units of all the GPCs in form of an index. In a subsequent geometry processing process, the corresponding geometry data may be read through the index, to process the corresponding geometry data subsequently.

In operation S2012, data that is not to be processed by a current GPC is discarded from the geometry data stream based on a preset PC acquisition strategy, to obtain the PC data to be processed by the GPC.

In some embodiments, the PC acquisition strategy may be that: based on a cluster identifier (ID) corresponding to the current GPC and a preset size of the PC data, a data range of the PC data to be processed by the GPC is determined in a round-robin mode, and the data acquired based on each data range is used as the PC data to be processed by the GPC. During implementation, after acquiring the index of each to-be-split geometry data in the geometry data stream, it may be determined whether the index of the geometry data belongs to the data range corresponding to the current GPC, and the to-be-split geometry data belonging to the data range of the PC data corresponding to the current GPC is used as the PC data to be processed by the GPC; and the to-be-split geometry data that does not belong to the data range of the PC data corresponding to the current GPC is discarded.

Exemplarily, in case that the geometry data stream includes 1 to 1000 (index) geometry data, there are two GPCs and the preset size of the PC data is 200, the data range of the PC data corresponding to the first GPC may be from 1 to 200, from 401 to 600 and from 801 to 1000; the data range of the PC data corresponding to the second GPC may be from 201 to 400 and from 601 to 800. Therefore, for the first GPC, after acquiring these 1000 geometry data, it may be determined that the first to 200th geometry data belong to the data range of the PC data corresponding to the first GPC itself, and the first to 200th geometry data are used as first PC data to be processed by the first GPC; for the 201st to 400th geometry data, since they do not belong to the data range of the PC data corresponding to the first GPC itself, the 201st to 400th geometry data are discarded, and so on, until the 801st to 100th geometry data are used as third PC data to be processed by the first GPC.

In the current embodiment, all the geometry data streams are read by the primitive distribution unit, and the data that is not to be processed by the current GPC is discarded, to obtain the PC data to be processed by the GPC. According to the method, the problem of data omission during distribution of the PC data may be reduced, since screening is performed on all the acquired geometry data.

In some embodiments, the primitive distribution unit may first further determine the data range of the PC data to be processed by the current GPC, and then read only the PC data to be processed by the GPC, from the geometry data stream. That is, the above operation of reading, by the primitive distribution unit, the PC data to be processed by the GPC, from the geometry data stream may also be achieved through the following operations S2013 and S2014.

In operation S2013, an address range of the PC data to be processed by the GPC is determined based on a preset PC acquisition strategy.

In some embodiments, the PC acquisition strategy may be that: based on a cluster ID corresponding to the current GPC and a preset size of the PC data, an address range of the PC data to be processed by the GPC is determined in a round-robin mode, and the data acquired based on each address range is used as the PC data to be processed by the GPC.

In operation S2014, the PC data to be processed by the GPC is read from the geometry data stream based on the address range.

Here, after obtaining the address range of each PC data to be processed by the GPC, the corresponding PC data may be read from the memory based on the address range of the PC data.

Exemplarily, in case that there are two GPCs, for the first GPC, based on a starting address of the geometry data stream and a unit address offset corresponding to the preset size of the PC data, it may be determined that the address range of the PC data corresponding to the first GPC includes (starting address, starting and ending addresses + unit address offset - 1), (starting and ending addresses + 2 × unit address offset, starting and ending addresses + 3 × unit address offset - 1), and so on; the address range of the PC data corresponding to the second GPC includes (starting and ending addresses + unit address offset, starting and ending addresses + 2 × unit address offset - 1), (starting and ending addresses + 3 × unit address offset, starting and ending addresses + 4 × unit address offset - 1), and so on. Then, the PC data to be processed by each of the GPCs is read by each of the GPCs from the memory based on the address range of the corresponding PC data.

In the current embodiment, the primitive distribution unit does not need to read all the geometry data streams, calculates the address range of the PC data to be processed by the GPC, and then may read the PC data to be processed by the GPC, thereby reducing requirements of accessing the memory while also reducing workload of the primitive distribution unit itself.

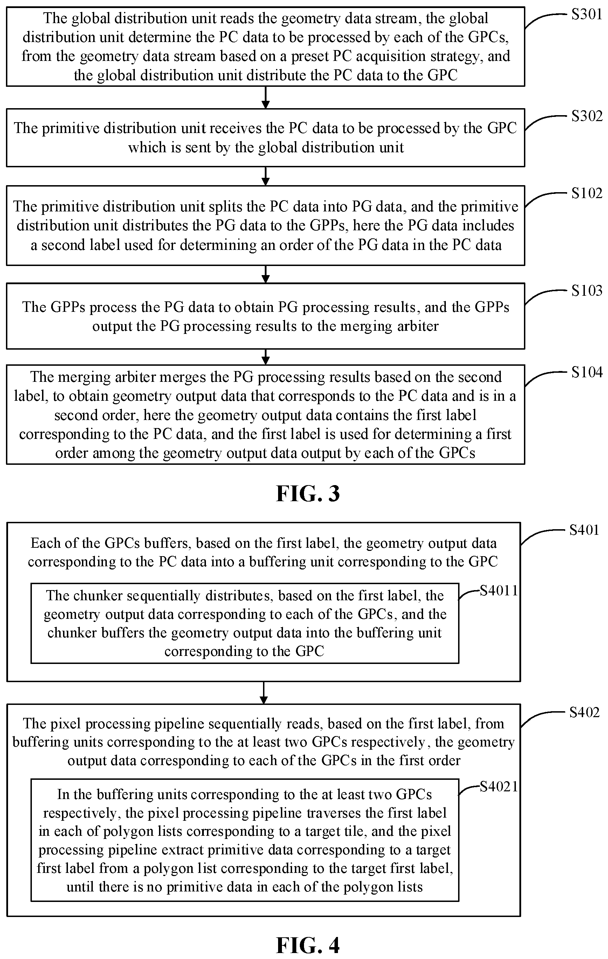

FIG. 3 is a third schematic flowchart of implementation of a method for geometry processing according to an embodiment of the application, and the method may be performed by a processor of a computer device. Based on FIG. 1, the GPU further includes a global distribution unit; the method in FIG. 1 further includes an operation S301, and correspondingly, the operation S101 may be updated as an operation S302, which will be described in combination with operations shown in FIG. 3.

In operation S301, the global distribution unit reads the geometry data stream, the global distribution unit determines the PC data to be processed by each of the GPCs, from the geometry data stream based on a preset PC acquisition strategy, and the global distribution unit distributes the PC data to the GPC.

In the embodiment of the application, the global distribution unit is connected to each of the GPCs and is configured to read the geometry data stream, and determine the PC data to be processed by each of the GPCs, from the geometry data stream based on the preset PC acquisition strategy; while the global distribution unit is further configured to distribute the PC data to be processed by each of the GPCs to the corresponding GPC.

In the embodiment of the application, the geometry data stream includes multiple to-be-split geometry data, and each of the multiple to-be-split geometry data is read by the global distribution unit in form of an index. In a subsequent geometry processing process, the corresponding geometry data may be read through the index, to process the corresponding geometry data subsequently.

In some embodiments, the PC acquisition strategy may be that: based on cluster IDs corresponding to current GPCs and a preset size of the PC data, a data range/address range of the PC data to be processed by each of the GPCs is determined in a round-robin mode. Then, the data range/address range of the PC data to be processed by each of the GPCs is sent to the corresponding GPC. Here, a specific implementation of determining the data range/address range of the PC data to be processed by each of the GPCs, in a round-robin mode may refer to the embodiment of FIG. 2 and will not be further described here.

In some other embodiments, the PC acquisition strategy may be that: based on cluster IDs corresponding to current GPCs and a preset size of the PC data, the geometry data stream is split first, and a data range/address range of each PC data at the point after splitting is determined. During distribution of the PC data, load information of each of the GPCs is acquired, and the PC data is distributed to the GPC with a minimum load, to achieve load balancing between the GPCs.

In operation S302, the primitive distribution unit receives the PC data to be processed by the GPC which is sent by the global distribution unit.

In some embodiments, the global distribution unit may send a data range of the PC data to be processed by each of the GPCs to the primitive distribution unit of each of the GPCs, or may send an address range of the PC data to be processed by each of the GPCs to the primitive distribution unit of each of the GPCs. It may be understood that compared to the solution provided in FIG. 2 where the primitive distribution unit needs to read, from the original geometry data stream, the PC data to be processed by the GPC to which the primitive distribution unit belongs; in the current embodiment, the primitive distribution unit in each cluster does not require a pre-agreed acquisition rule (that is, the PC acquisition strategy), instead, the acquisition rule is stored by the global distribution unit, to achieve distribution of PC data from the geometry data stream to each of the GPCs.

In the current embodiment, each primitive distribution unit does not require a pre-agreed PC acquisition strategy, and distribution of the PC data from the geometry data stream to each of the GPCs is achieved by the global distribution unit. In this way, in the process of changing the PC acquisition strategy, it only needs to configure the global distribution unit, and it is unnecessary to configure the primitive distribution unit in each of the GPCs, thereby improving flexibility of the system.

FIG. 4 is a fourth schematic flowchart of implementation of a method for geometry processing according to an embodiment of the application, and the method may be performed by a processor of a computer device. The GPU further includes at least one pixel processing pipeline; based on FIG. 1, the method may further include the following operations S401 and S402, which will be described in combination with operations shown in FIG. 4.

In operation S401, each of the GPCs buffers, based on the first label, the geometry output data corresponding to the PC data into a buffering unit corresponding to the GPC.

In the embodiment of the application, after the GPC completes geometry processing of the PC data, the GPC may generate geometry output data that corresponds to the PC data and is in a second order. Correspondingly, the geometry output data that corresponds to the PC data and is in the second order further includes the first label.

In some embodiments, different GPCs correspond to different buffering units, and the buffering units for different GPCs are independent of each other, here the buffering units that are independent of each other may be independent address spaces or address ranges of a global memory, or may be memories allocated to each of the GPCs.

In the process of buffering the geometry output data that corresponds to the PC data and is in the second order by the GPC, the GPC may store the geometry output data corresponding to the PC data into the buffering unit corresponding to the current GPC, based on the first label of the PC data.

Exemplarily, an example is that the original geometry data stream includes PC data 1 to N arranged in order, here the first label corresponding to the PC data 1 may be set as "1", ..., and the first label corresponding to the PC data N may be set as "N". For the first GPC, if the (n+1)-th PC data is sequentially distributed to the first GPC, n is an integer equal to or greater than 0. Then, after the first GPC has processed the PC data sequentially to obtain the corresponding geometry output data, the first GPC may sequentially buffer the geometry output data corresponding to the n+1 PC data respectively into the buffering unit corresponding to the GPC, in an order of the first label.

In operation S402, the pixel processing pipeline sequentially reads, based on the first label, from buffering units corresponding to the at least two GPCs respectively, the geometry output data corresponding to each of the GPCs in the first order.

In some embodiments, since different GPCs correspond to different buffering units, that is, after all the PC data corresponding to the original geometry data stream have been processed, all the processed geometry output data are dispersed into the buffering units (of course, there may be some buffering units in which the processed geometry output data is not present, since there is no PC data to be processed by the GPCs corresponding to the buffering units respectively). Therefore, the pixel processing pipeline may restore a relative order of the geometry output data in the buffering units based on the first label corresponding to each of the geometry output data, and sequentially read the geometry output data corresponding to each of the GPCs according to the first order.

Exemplarily, an example is that the original geometry data stream includes PC data 1 to 5 arranged in order, if there are two GPCs, here the first, second and fifth PC data are distributed to the first GPC; the third and fourth PC data are distributed to the second GPC; correspondingly, the buffering unit corresponding to the first GPC stores the geometry output data corresponding to the first, second and fifth PC data respectively, and the buffering unit corresponding to the second GPC stores the geometry output data corresponding to the third and fourth PC data respectively. At this time, the pixel processing pipeline may sequentially read the 5 geometry output data based on the first label corresponding to each of the geometry output data respectively, according to the relative order of the PC data corresponding to the geometry output data, that is, the first order.

In the current embodiment, since the PC data includes the first label used for determining an order of the PC data in the geometry data stream, while the first label is passed to the pixel processing pipeline as the PC data is processed by the GPC to generate the corresponding geometry output data, then the pixel processing pipeline may determine the first order among the geometry output data output by each of the GPCs, based on the first label.

According to the above embodiments, DOP of the geometry processing process is improved, and correspondingly, DOP of a back-end pixel processing process may also be improved through a TBR architecture. Therefore, in some embodiments, each of the GPCs further includes a chunker. The chunker is located between the merging arbiter and the buffering unit. The above operation of buffering, by each of the GPCs based on the first label, the geometry output data corresponding to the PC data into the buffering unit corresponding to the GPC may be implemented by the following operation S4011.

In operation S4011, the chunker sequentially distributes, based on the first label, the geometry output data corresponding to each of the GPCs, and the chunker buffers the geometry output data into the buffering unit corresponding to the GPC.

The operation of distributing the geometry output data corresponding to each of the GPCs, and buffering the geometry output data into the buffering unit corresponding to the GPC includes the following operations. The chunker sequentially determines, based on the second order, a tile corresponding to each primitive data in the geometry output data. The chunker writes each primitive data in the geometry output data into a polygon list of the tile corresponding to the primitive data, in the buffering unit corresponding to the GPC.

In some embodiments, since the first label may characterize the order of the geometry output data, the chunker needs to sequentially process the distribution process of each of the geometry output data based on the first label corresponding to each of the geometry output data. Within the geometry output data, the chunker may sequentially determine the tile corresponding to each primitive data in the geometry output data based on the second order. Therefore, from an overall perspective, with the first label and the second label, the chunker may sequentially determine the tile to which each primitive data belongs according to an order of each primitive data in the original geometry data stream, and sequentially store the tile in the polygon list corresponding to the tile.

In the current embodiment, since the tile corresponding to each primitive data in the geometry output data is sequentially determined by the chunker based on the first label; each primitive data in the geometry output data is written by the chunker into the polygon list of the tile corresponding to each primitive data, such that a relative order of at least two primitive data belonging to one geometry output data in the polygon list is the same as an order of the at least two primitive data in the geometry data stream.

In some embodiments, each polygon list ends with a terminator; in the process of extracting the PC data from the polygon list by the pixel processing pipeline, the terminator is used for indicating whether the PC data in the polygon list is completely extracted.

In some embodiments, in case that at least one target primitive data belonging to a target tile is present in the geometry output data, a polygon list of the target tile includes the first label of the geometry output data and each target primitive data belonging to the target tile in the geometry output data.

An order of each target primitive data in the polygon list is the same as the second order.

In some embodiments, the first label of target PG data is located before the target primitive data. Therefore, the pixel processing pipeline may first read the first label corresponding to the primitive data, and then determine whether to read the primitive data corresponding to the first label. In some other embodiments, the first label of the target PG data may also be located after each of the target primitive data.

In some embodiments, the above operation of sequentially reading, by the pixel processing pipeline based on the first label, from the buffering units corresponding to the at least two GPCs respectively, the geometry output data corresponding to each of the GPCs in the first order may be implemented by the following operation S4021.

In operation S4021, in the buffering units corresponding to the at least two GPCs respectively, the pixel processing pipeline traverses the first label in each of polygon lists corresponding to a target tile, and the pixel processing pipeline extracts primitive data corresponding to a target first label from a polygon list corresponding to the target first label, until there is no primitive data in each of the polygon lists.

In some embodiments, all the first labels may be acquired from all the polygon lists, and the target first label may be determined based on an order of all the first labels. In the current embodiment, a storage position of the first label in the polygon list may be adaptively adjusted based on actual scenarios.

In some other embodiments, in case that the first label of the target PG data is located before the target primitive data, only the first label located in a header of each of the polygon lists may be acquired, and the target first label is determined in an order of precedence. That is, in case that the first label of the target PG data is located before the target primitive data, the first label located in the header of each of the polygon lists corresponding to the target tile is traversed by the pixel processing pipeline, and the target first label is determined based on an order of the first label in the header of each of the polygon lists.

In some embodiments, the above operation S4021 may be implemented by processes as follows. The first label located in the header of each of the polygon lists corresponding to the tile is acquired by the pixel processing pipeline. In case that there is at least one first label in each of the polygon lists, the target first label is determined based on an order of acquiring the first label, the target first label and primitive data corresponding to the target first label are sequentially extracted from the polygon list where the target first label is located, and the processes return to perform the operation of acquiring, by the pixel processing pipeline, the first label located in the header of each of the polygon lists corresponding to the tile. In case that there is no first label and primitive data in each of the polygon lists, it indicates that the distribution process of each primitive data has been completed.

In the current embodiment, the first label of the PG corresponding to each primitive data is set before the primitive data in the polygon list, such that the order of each primitive data may be identified in the process of merging the polygon lists corresponding to the current tile by the pixel processing pipeline, thereby restoring the original input order effectively.

Applications of the method for geometry processing according to the embodiment of the application in actual scenarios will be described below, which involves the method for geometry processing in the TBR architecture.

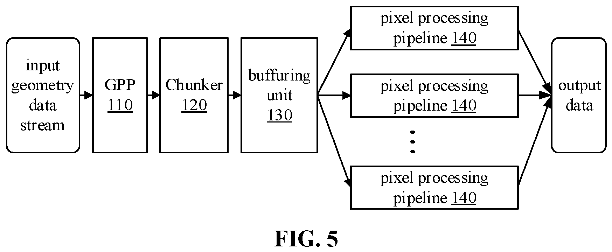

In a rendering process of a modern GPU, the GPU needs to read vertex information first from a vertex cache that has been configured by a software, and then complete output by passing the information through a front end (vertex shader, tessellation, geometry shader, and many fixed-function geometry processing and chunking functions) that is a GPP and a back end that is a pixel processing pipeline, etc. Output after data is processed by the GPP will be used as input of the pixel processing pipeline. In order to render in parallel, the GPU architecture generally uses multiple pixel processing pipelines to perform block-based rendering, that is, coordinates of an entire screen are partitioned into multiple blocks, and after a front-end module has processed vertex coordinates, the front-end module outputs a result to a specific data structure, a specific data structure is separately provided for each of the blocks and characterizes primitive information covering the current block, each of the blocks may be independently rendered in a fragment shader, and the GPP processes primitive information of the entire screen. Therefore, with reference to FIG. 5, a schematic diagram of a system architecture that includes a single GPP corresponding to one or more pixel processing pipelines is shown.

As shown in FIG. 5, the GPU pipeline includes a GPP 110, input data of the GPP 110 is a geometry data stream, and after the GPP 110 completes the process of processing the geometry data stream, the GPP 110 sends the processed geometry data stream to a chunker 120, the chunker 120 splits the processed geometry data stream into processed geometry data for different blocks according to a preset chunking strategy, and buffers the processed geometry data into a buffering unit 130; then, the processed geometry data for corresponding blocks are read by at least one parallel pixel processing pipeline 140 from the buffering unit 130 respectively, to complete the pixel processing process and thus obtain the final output data.

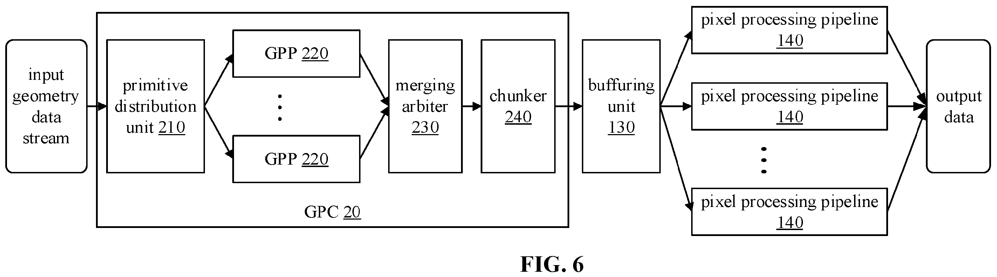

After research, it is found that the single GPP has insufficient processing capability. Therefore, based on the graphics processing pipeline of FIG. 5, the application provides a solution including parallel GPPs. With reference to FIG. 6, a schematic diagram of a system architecture that uses parallel GPPs corresponding to one or more pixel processing pipelines is shown.

As shown in FIG. 6, for the GPU pipeline, compared to the pipeline provided in FIG. 5, the GPP 110 and the chunker 120 in FIG. 5 are updated as a GPC 20. The GPC 20 includes a primitive distribution unit 210, at least one GPP 220, a merging arbiter 230 and a chunker 240. The primitive distribution unit 210 is configured to split an input geometry data stream into multiple parts and send the parts to at least one GPP 220 respectively, and after the at least one GPP 220 has processed the parts, output data of the at least one GPP 220 is merged in the original order by the merging arbiter 230, and then the merged data enters the chunker 240, to be processed. The chunker 240 splits the processed geometry data stream into processed geometry data for different blocks according to a preset chunking strategy, and buffers the processed geometry data into the buffering unit 130; then, the processed geometry data for corresponding blocks are read by at least one parallel pixel processing pipeline 140 from the buffering unit 130 respectively, to complete the pixel processing process and thus obtain the final output data.

It may be understood that the above GPC is a logical concept, and is also a concept in physical design of a chip. Physically speaking, the GPPs and units in the same GPC are physically located at the same region on a die of the chip (the die refers to a separate wafer region, where a complete functional unit or a group of relevant functional units of the chip is contained). Logically speaking, the primitive distribution unit and the merging arbiter in the GPC merge input and output ends of multiple GPPs respectively, such that at least one GPP has the same input and output interfaces as input and output interfaces of the original single GPP, and may directly replace the original single GPP, to achieve the purpose of increasing throughput capability.

At present, design of parallel GPPs lies in that the input geometry data stream is split into multiple PGs according to a small granularity (for example, hundreds of triangles form a group), then each of the PGs is sent to a corresponding GPP, and after the GPPs have processed the PGs, output results of the GPPs are merged by the merging arbiter according to the original input order and sent out. In some embodiments, a mode of restoring the original input order by the merging arbiter is that a label serial number is attached to each of the PGs by the primitive distribution unit. The label serial number is passed to the merging arbiter through the corresponding GPP, such that the merging arbiter may identify an order of the processed PG data output by each GPP. It may be understood that the above mechanism of restoring the order through the label serial number is only an exemplary description, and the order of the PGs may also be restored through other mechanisms according to the application.

In some embodiments, after the input geometry data stream is split into multiple PGs, there may also be multiple distribution mechanisms for distributing the PGs to the GPPs. Exemplarily, the PGs may be sequentially distributed to the GPPs in a round-robin mode; in addition, the PGs may also be distributed to the GPPs in a dynamic load balancing mode, that is, each time when the primitive distribution unit generates a PG, the primitive distribution unit may select a GPP with a minimum number of unfinished tasks from n GPPs and send the PG to this GPP, such that processing loads of multiple GPPs may be balanced.

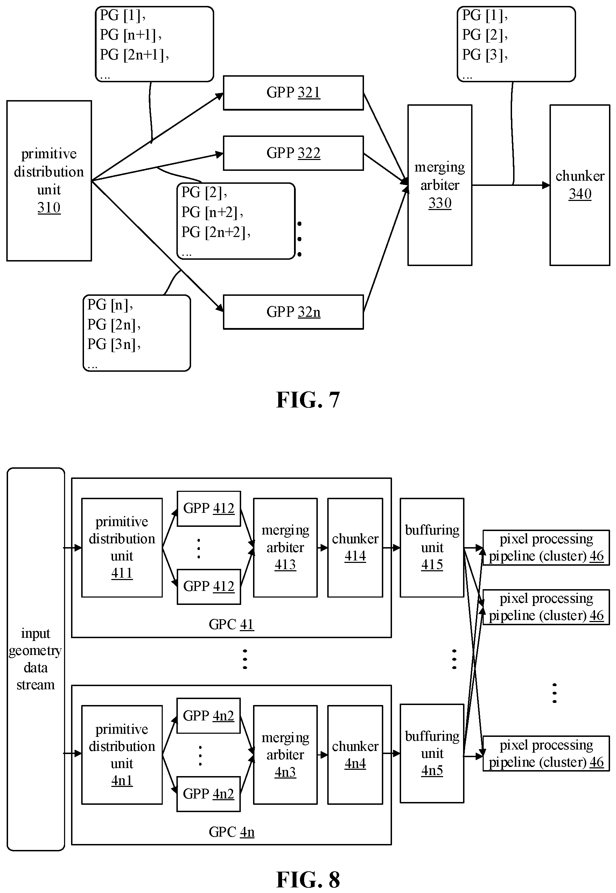

With reference to FIG. 7, it is a schematic diagram of task distribution and merging of GPPs according to an embodiment of the application. A primitive distribution unit 310 is configured to split input primitive data into multiple PGs such as PG 1 to PG 3n in FIG. 7, and then distribute the partitioned PGs to different GPPs. For example, in FIG. 7, PG 1, PG n+1, PG 2n+1 or the like are distributed to a GPP 321; PG 2, PG n+2, PG 2n+2 or the like are distributed to a GPP 322, ..., PG n, PG 2n, PG 3n or the like are distributed to a GPP 32n. Each of the GPPs sends the processed data to a merging arbiter 330, the merging arbiter 330 merges and arbitrates the processed data, restores the processed data to the original order of the PGs, and sends the data to a chunker 340. It may be understood that the above process needs to ensure that the output order is completely consistent with the input order, which is usually known as a GPU Application Programming Interface (API) Order preserving requirement.

In an actual application, some applications or games may result in very heavy GPP workloads, for example, the applications or games may have a large number of primitives, and turn on tessellation, complex vertex shader and geometry shader, all of which require a large GPP processing throughput. In a relevant technical solution, GPP extendable capability is limited, and even through the technical solution provides design of multiple GPPs, the technical solution is limited by throughput of two splitting and merging units, that is, the primitive distribution unit and the merging arbiter, it is difficult to continuously extend GPPs for the technical solution. Furthermore, after the number of the GPPs increases, the GPPs are usually distributed in multiple GPCs (due to requirements of architectural design or physical design of the chip) and are physically remote from each other. If inputs and outputs of the GPPs distributed in multiple clusters are connected by a distributor and a chunker respectively, it needs to ensure a large bandwidth while solve task imbalance between multiple pipelines, which is also difficult to a certain extent (size requirement of a buffer required for merging and arbitration increases dramatically).

Based on the above reasons, an embodiment of the application proposes a method/apparatus, which may achieve that geometry processing operations are processed by multiple GPCs in parallel, to improve geometry processing performance of the entire GPU. There are multiple parallel GPPs in each of the GPCs, to ensure that there are good throughput and computing capabilities in each of the GPCs. Furthermore, parallelism of multiple GPCs further improves an overall geometry processing throughput capability, thereby solving a problem of insufficient improvement of throughput capabilities of GPPs that are parallel in a level. In this way, an effect of having configurable geometry throughput and computing power at each of two levels partitioned for the entire GPU is also achieved.

With reference to FIG. 8, it is a first schematic diagram of GPU's GPPs that are parallel in multiple levels according to an embodiment of the application. The first level is a level of GPCs (it is also referred to as a GPU core or GPU by some manufacturers), the level of GPCs includes a total of n GPCs from GPC 41 to GPC 4n, here the first GPC includes a primitive distribution unit 411, at least two GPPs 412, a merging arbiter 413 and a chunker 414, ..., the n-th GPC includes a primitive distribution unit 4n1, at least two GPPs 4n2, a merging arbiter 4n3 and a chunker 4n4, while output data of each of the GPCs may be stored in a corresponding buffering unit, for example, the first GPC corresponds to a buffering unit 415, and the n-th GPC corresponds to a buffering unit 4n5; the second level is a level of GPPs, the level of GPPs may include multiple pixel processing pipelines (clusters) 46. There may be multiple GPPs in each of the GPCs, there is a primitive distribution unit at a front end of each of the GPCs, the primitive distribution unit is responsible for capturing vertex information from the memory and splitting the data stream by using a fixed algorithm (such as round-robin), to perform two-level data splitting and distribution.

In order to facilitate understanding the above solution, descriptions will be made below by an example that the architecture includes m GPCs and each of the GPCs includes n GPPs. First, an input primitive data stream is uniformly split into fixed-size Primitive Clusters (PCs) according to a certain rule, and each of the PCs is distributed to a corresponding GPC in a round-robin order. There are two reading modes for a reading process, one mode is that each of the GPCs reads all the input geometry data streams, and then discards data that is not to be processed by the GPC; another mode is that each of the GPCs calculates a range of data that is to be processed by the GPC, and reads only the input geometry data stream in the range.

Within a GPC, a PC may be further split into n PGs, the n PGs are distributed to the GPPs respectively. After the GPPs have processed the PGs, data of the GPPs are merged and restored to an order by the merging arbiter, and sent to the chunker. The distribution, merging and arbitration mechanism here is completely consistent with that of the related art as described above (distribution may be performed in a round-robin mode or in a dynamic load balancing mode), which will not be elaborated here.

Finally, each chunker outputs a polygon list to a unique buffering space for each GPC, a pixel processing pipeline (it is also referred to as a rasterization processing pipeline or a fragment processing pipeline) following the chunker, no matter it is in form of single channel, multiple channels or a multiple channels cluster, may merge the polygon list output by each GPC, restore the order and perform rasterization processing.

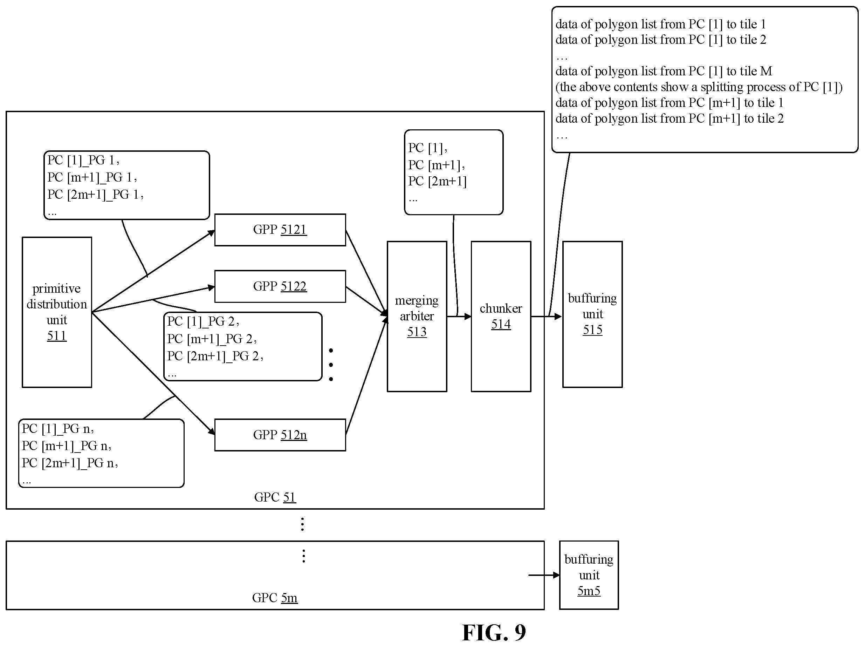

With reference to FIG. 9, it is a schematic diagram of data partitioning and distribution based on a round-robin mode according to an embodiment of the application.

There are a total of m GPCs from GPC 51 to GPC 5m, and a primitive distribution unit in each of the GPCs may read PCs to be processed by the GPC itself, from the input geometry data stream. As shown in FIG. 9, a round-robin order is used at present to split/read the PCs, that is, for GPC 51, the PCs to be processed by GPC 51 are the first PC, the (m+1)-th PC, and so on; for GPC 5m, the PCs to be processed by GPC 5m are the m-th PC, the 2m-th PC, and so on. At this time, the primitive distribution unit in a GPC is configured to acquire the PCs to be processed by the GPC itself, from the geometry data stream.

Within a GPC, taking GPC 51 as an example, the primitive distribution unit 511 in GPC 51 may split the obtained first PC, (m+1)-th PC, (2m+1)-th PC or the like respectively, and then distribute the split data to n GPPs (GPP 5121 to GPP 512n) in GPC 51. Exemplarily, for the first PC, the primitive distribution unit 511 splits the first PC into n PGs, distributes PG 1 of the first PC to the GPP 5121, distributes PG 2 of the first PC to the GPP 5122, and distributes PG n of the first PC to the GPP 512n.

The merging arbiter 513 is configured to rearrange the PGs output by the GPPs according to the input order and output the rearranged data to the chunker. Exemplarily, for the first PC and the (m+1)-th PC, GPP 5121 to GPP 512n send the processed PG 1 to PG n of the first PC and the processed PG 1 to PG n of the (m+1)-th PC to the merging arbiter 513 respectively; the merging arbiter 513 rearranges the 2n PGs sequentially to obtain the processed PG 1 of the first PC, PG 2 of the first PC, ..., PG n of the first PC, the processed PG 1 of the (m+1)-th PC, PG 2 of the (m+1)-th PC, ..., PG n of the (m+1)-th PC, and further merges them into the first PC and the (m+1)-th PC.

The chunker 514 is configured to distribute multiple to-be-distributed data in each of the PGs based on the above order, and generate a polygon list for each tile in the buffering unit 515. The polygon list includes the distributed data corresponding to the tile. Then, for each tile, the pixel processing pipeline may acquire the distributed data corresponding to the tile from each polygon list corresponding to the tile, to perform rasterization processing of the tile. It may be understood that different buffering units are provided for different chunkers (actually, also for different GPCs), and the buffering units corresponding to different chunkers (GPCs) are independent of each other. The buffering units that are independent of each other here may be independent address spaces or address ranges of the global memory, or may be allocated to each of the clusters.

Correspondingly, GPC 5m may also generate a polygon list for each tile in the buffering unit 5m5. The polygon list includes the distributed data corresponding to the tile.

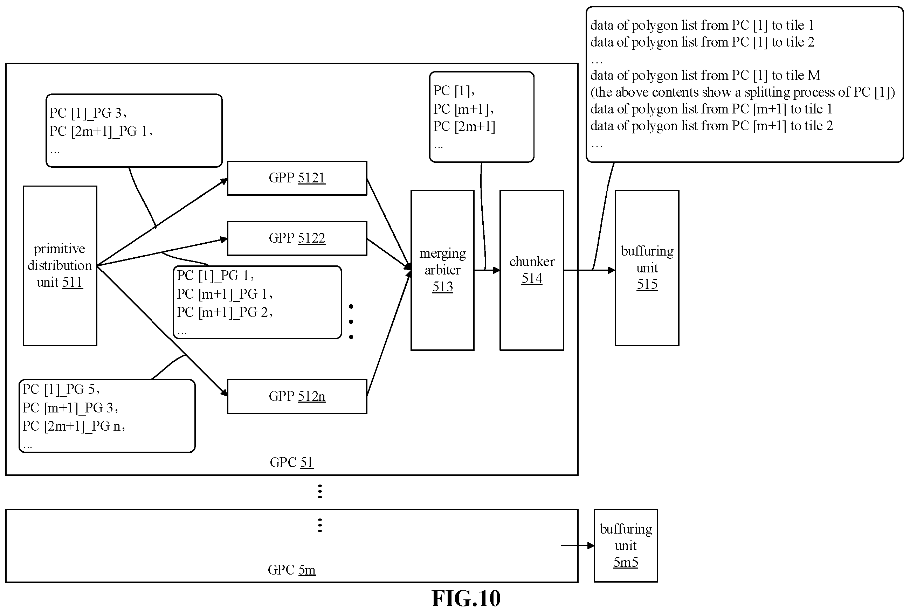

With reference to FIG. 10, it is a schematic diagram of data partitioning and distribution based on a load balancing mode within a GPC and based on a round-robin mode between GPCs according to an embodiment of the application. It may be seen that unlike FIG. 9, the input data of GPPs in GPC 51 are not obtained by distributing in a round-robin mode, instead, obtained by distributing based on loads of the GPPs. The primitive distribution unit 511 may distribute the split PGs based on the loads corresponding to the GPPs 5121 to 512n respectively, and since loads of the GPPs are different, the PGs corresponding to PCs may be distributed to a GPP with a lower load following the primitive distribution unit 511 according to the loads (rather than in a round-robin mode), for example, PG 1 of the first PC is distributed to GPP 5122, PG 3 of the first PC is distributed to GPP 5121, and PG 5 of the first PC is distributed to GPP 512n; for other PGs of the first PC such as PG 2 of the first PC, they are distributed to other GPPs that are not shown in FIG. 10 (which may be GPP 5123 that is not shown in FIG. 10); similarly, other PGs are also distributed to a subsequent GPP with a lower load according to the loads, which will not be elaborated here. It may be understood that FIG. 10 is an example based on the loads. Therefore, it seems that there is no regularity in the input data of each of the GPPs.

In the above embodiment, the primitive distribution unit in each of the GPCs independently reads the input geometry data stream respectively, and selects a part of the input geometry data stream to be processed by the primitive distribution unit itself.

In some other embodiments, two-level primitive distribution units may be used, here a primitive first-level distribution unit is responsible for reading the input geometry data stream, splitting the input geometry data stream into PCs, and distributing the PCs to the GPCs respectively. A primitive second-level distribution unit in the GPC continuously splits the input PC into PGs and distributes the PGs to the GPPs respectively. Subsequent merging and other operations are consistent with those described in the solution of the above embodiment.

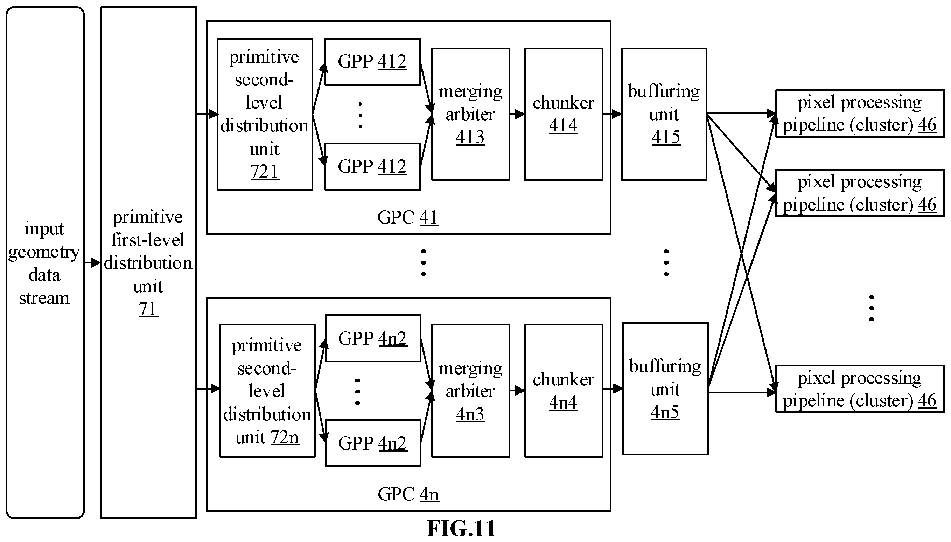

With reference to FIG. 11, a second schematic diagram of another GPU's GPPs that are parallel in multiple levels is shown. It may be seen that compared to FIG. 8, original primitive distribution units 411 to 4n1 are updated as current primitive first-level distribution unit 71, primitive second-level distribution unit 721 to primitive second-level distribution unit 72n. The primitive first-level distribution unit 71 is configured to read all the input geometry data streams, then determine data to be processed by each of the GPCs, and distribute the data to be processed by each of the GPCs to each of the GPCs; the primitive second-level distribution unit is configured to receive the data to be processed by the GPC where the primitive second-level distribution unit is located, further split the data into n PGs, and distribute the n PGs to GPPs in the GPC respectively. At this time, the level of GPCs includes a total of n GPCs from GPC 41 to GPC 4n, here the first GPC includes a primitive second-level distribution unit 721, at least two GPPs 412, a merging arbiter 413 and a chunker 414, ..., the n-th GPC includes a primitive second-level distribution unit 72n, at least two GPPs 4n2, a merging arbiter 4n3 and a chunker 4n4, while output data of each of the GPCs may be stored in a corresponding buffering unit, for example, the first GPC corresponds to a buffering unit 415, and the n-th GPC corresponds to a buffering unit 4n5; the level of GPPs has not changed and includes multiple pixel processing pipelines (clusters) 46.

Two-level parallel GPPs are achieved through the above embodiment, which may not only flexibly configure the number of GPCs, but also improve GPP processing efficiency. Parallelism of the GPPs may be further improved, compared to the GPP parallel mode in the related art. Furthermore, two-level parallel GPPs are used, and compared to one-level parallelism made by way of merging and arbitration, the chunker and the merging arbiter do not need to process outputs of too many GPPs, and will not become a performance bottleneck (when outputs of too many pipelines are merged, it may result in pipeline stall and serialization effects); furthermore, compared to one-level parallelism where multiple polygon lists are merged at the front end of the pixel processing pipeline, the pixel processor stage does not need to merge data output by too many GPPs, and will not become a performance bottleneck. The embodiments of the application may enhance configurability of the geometry processing capability of the entire system, and facilitate configuration of forming clusters together with the pixel processing pipeline.

Based on the foregoing embodiments, an embodiment of the application provides an apparatus for geometry processing, units included in the apparatus and modules included in each of the units may be implemented by a processor of a computer device; of course, the units included in the apparatus and the modules included in the units may also be implemented by a specific logic circuit; during implementation, the processor may be a Central Processing Unit (CPU), a Microprocessor Unit (MPU), a Digital Signal Processor (DSP) or a Field Programmable Gate Array (FPGA), etc.

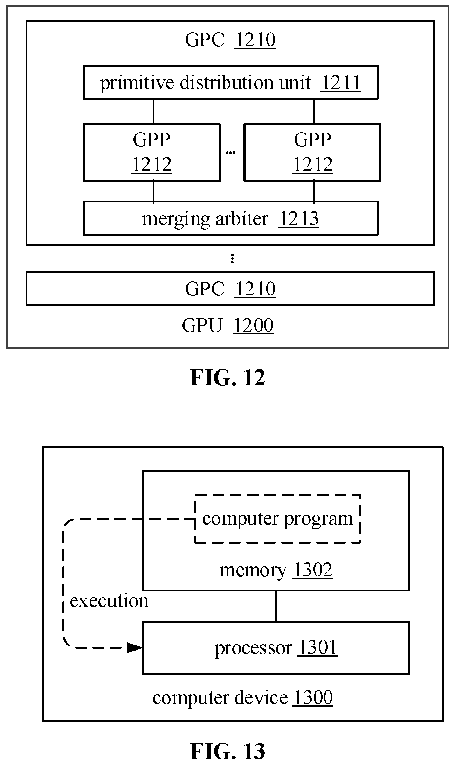

FIG. 12 is a schematic diagram of compositional structures of a GPU according to an embodiment of the application, and as shown in FIG. 12, the GPU 1200 includes at least two GPCs 1210, each of the at least two GPCs 1210 includes a primitive distribution unit 1211, at least two GPPs 1212 and a merging arbiter 1213.

The primitive distribution unit 1211 is configured to acquire PC data from a geometry data stream, here the PC data includes a first label used for determining an order of the PC data in the geometry data stream.

The primitive distribution unit 1211 is further configured to split the PC data into PG data, and distribute the PG data to the GPPs, here the PG data includes a second label used for determining an order of the PG data in the PC data.

The GPPs 1212 are configured to process the PG data to obtain PG processing results, and output the PG processing results to the merging arbiter.

The merging arbiter 1213 is configured to merge the PG processing results based on the second label, to obtain geometry output data that corresponds to the PC data and is in a second order, here the geometry output data contains the first label corresponding to the PC data, and the first label is used for determining a first order among the geometry output data output by each of the GPCs.

In some embodiments, the primitive distribution unit is further configured to read the PC data to be processed by the GPC, from the geometry data stream.

In some embodiments, the primitive distribution unit is further configured to: read the geometry data stream; and discard data that is not to be processed by a current GPC from the geometry data stream based on a preset PC acquisition strategy, to obtain the PC data to be processed by the GPC.

In some embodiments, the primitive distribution unit is further configured to: determine an address range of the PC data to be processed by the GPC, based on a preset PC acquisition strategy; and read the PC data to be processed by the GPC from the geometry data stream based on the address range.

In some embodiments, the GPU further includes a global distribution unit, the global distribution unit is configured to: read the geometry data stream; determine the PC data to be processed by each of the GPCs, from the geometry data stream based on a preset PC acquisition strategy; and distribute the PC data to the GPC.

In some embodiments, the GPU further includes at least one pixel processing pipeline, and each of the GPCs is further configured to buffer, based on the first label, the geometry output data corresponding to the PC data into a buffering unit corresponding to the GPC; the pixel processing pipeline is configured to sequentially read, based on the first label, from buffering units corresponding to the at least two GPCs respectively, the geometry output data corresponding to each of the GPCs in the first order.

In some embodiments, each of the GPCs further includes a chunker, the chunker is configured to: sequentially distribute, based on the first label, the geometry output data corresponding to each of the GPCs; and buffer the geometry output data into the buffering unit corresponding to the GPC, the chunker is further configured to: sequentially determine, based on the second order, a tile corresponding to each primitive data in the geometry output data; and write each primitive data in the geometry output data into a polygon list of the tile corresponding to the primitive data, in the buffering unit corresponding to the GPC.

In some embodiments, in case that at least one target primitive data belonging to a target tile is present in the geometry output data, a polygon list of the target tile includes the first label of the geometry output data and each target primitive data belonging to the target tile in the geometry output data, here an order of each target primitive data in the polygon list is the same as the second order.

In some embodiments, the pixel processing pipeline is further configured to: in the buffering units corresponding to the at least two GPCs respectively, traverse the first label in each of polygon lists corresponding to a target tile; and extract primitive data corresponding to a target first label from a polygon list corresponding to the target first label, until there is no primitive data in each of the polygon lists, here the target first label is determined based on an order of the first label in a header of each of the polygon lists.

Descriptions of the above apparatus embodiment are similar to descriptions of the above method embodiments, and have advantageous effects similar to those of the method embodiments. In some embodiments, functions achieved by the apparatus according to the embodiment of the application or units included in the apparatus according to the embodiment of the application may be configured to perform the method described in the above method embodiments. For technical details that are not disclosed in the apparatus embodiment of the application, they should be understood by referring to descriptions of the method embodiments of the application.

It should be noted that in the embodiments of the application, if the above method for geometry processing is implemented in form of software functional unit and is sold or used as an independent product, it may also be stored in a computer-readable storage medium. Based on such understanding, the technical solutions of the embodiments of the application substantially, or parts making contributions to the related art may be embodied in form of software product, and the computer software product is stored in a storage medium, and includes several instructions configured to enable a computer device (which may be a personal computer, a server, or a network device, etc.) to perform all or part of the methods described in various embodiments of the application. The foregoing storage medium includes various media capable of storing program codes, such as a U disk, a mobile hard disk, a Read-Only Memory (ROM), a magnetic disk, or an optical disk, etc. In this way, the embodiments of the application are not limited to any specific hardware, software or firmware, or any combination of hardware, software and firmware.

An embodiment of the application provides a computer device, the computer device includes a memory and a processor, the memory has stored thereon a computer program executable on the processor, and part or all of operations of the above method are implemented when the program is executed by the processor.

An embodiment of the application provides a computer-readable storage medium, the computer-readable storage medium has stored thereon a computer program, part or all of operations of the above method are implemented when the computer program is executed by a processor. The computer-readable storage medium may be transient or non-transient.

An embodiment of the application provides a computer program, the computer program includes computer-readable codes, and in case that the computer-readable codes are executed in a computer device, a processor in the computer device performs part or all of operations for implementing the above method.

An embodiment of the application provides a computer program product, the computer program product includes a non-transitory computer-readable storage medium having stored thereon a computer program, part or all of operations of the above method are implemented when the computer program is read and executed by a computer. The computer program product may be specifically implemented by hardware, software, or a combination of hardware and software. In some embodiments, the computer program product is specifically embodied as a computer storage medium, and in some other embodiments, the computer program product is specifically embodied as a software product, such as a Software Development Kit (SDK), etc.

It should be noted here that the above descriptions of various embodiments tend to emphasize differences between various embodiments, and the same or similar points of various embodiments may refer to each other. Descriptions of the above device, storage medium, computer program and computer program product embodiments are similar to descriptions of the above method embodiments, and have advantageous effects similar to those of the method embodiments. For technical details that are not disclosed in the device, storage medium, computer program and computer program product embodiments of the application, they should be understood by referring to descriptions of the method embodiments of the application.

FIG. 13 is a schematic diagram of a hardware entity of a computer device according to an embodiment of the application. As shown in FIG. 13, the hardware entity of the computer device 1300 includes a processor 1301 and a memory 1302, the memory 1302 has stored thereon a computer program executable on the processor 1301, and operations of the method of any one of the above embodiments are implemented when the program is executed by the processor 1301.

The memory 1302 has stored thereon a computer program executable on the processor, the memory 1302 is configured to store instructions and applications executable by the processor 1301, and the memory 1302 may also buffer data (such as image data, audio data, voice communication data, and video communication data) that will be processed or has been processed by the processor 1301 and each unit in the computer device 1300, which may be achieved through a FLASH or a Random Access Memory (RAM).

Operations of the method for geometry processing of any one of the above embodiments are implemented when the program is executed by the processor 1301. The processor 1301 usually controls an overall operation of the computer device 1300.

An embodiment of the application provides a computer storage medium, the computer storage medium has stored thereon one or more programs, the one or more programs may be executed by one or more processors, to implement operations of the method for geometry processing of any one of the above embodiments.

It should be noted here that descriptions of the above storage medium and device embodiments are similar to descriptions of the above method embodiments, and have advantageous effects similar to those of the method embodiments. For technical details that are not disclosed in the storage medium and device embodiments of the application, they should be understood by referring to descriptions of the method embodiments of the application.

The above processor may be at least one of an Application Specific Integrated Circuit (ASIC), a DSP, a Digital Signal Processing Device (DSPD), a Programmable Logic Device (PLD), a FPGA, a CPU, a controller, a microcontroller, or a microprocessor. It may be understood that electronic devices implementing functions of the above processor may also be other electronic devices, which are not specifically limited in the embodiments of the application.

The above computer storage medium/memory may be a ROM, a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an optical disk, or a Compact Disc Read-Only Memory (CD-ROM), or other memories; or may be various terminals including one of the above memories or any combination of the above memories, such as a mobile phone, a computer, a tablet device, a PDA, etc.

It should be understood that "one embodiment" or "an embodiment" mentioned throughout the description means that specific features, structures or characteristics related to the embodiment are included in at least one embodiment of the application. Therefore, "in one embodiment" or "in an embodiment" appeared throughout the description does not necessarily refer to the same embodiment. Furthermore, these specific features, structures or characteristics may be combined in one or more embodiments in any suitable way. It should be understood that in various embodiments of the application, sizes of serial numbers of the above operations/processes do not mean execution orders of the above operations/processes, the execution order of each of the operations/processes should be determined by its function and internal logic, and should not pose any limitation on implementations of the embodiments of the application. Serial numbers of the above embodiments of the application are only for the purpose of descriptions, and do not represent advantages or disadvantages of the embodiments.

It should be noted that in the application, terms "include", "contain" or any other variants thereof are intended to cover non-exclusive inclusion, such that a process, method, article or device including a series of elements includes not only those elements, but also other elements that are not listed explicitly, or further includes elements inherent to such process, method, article or device. Without any further limitation, an element defined by a sentence "includes a..." does not exclude existence of other identical elements in the process, method, article or device including the element.

In several embodiments provided in the application, it should be understood that the disclosed devices and methods may be implemented in other ways. The above device embodiments are only exemplary. For example, division of units is only a logical function division, and there may be other division modes in an actual implementation. For example, multiple units or components may be combined or may be integrated into another system, or some features may be ignored or may not be performed. Furthermore, mutual coupling or direct coupling or communication connection between components as shown or discussed may be indirect coupling or communication connection of devices or units made through some interfaces, and may be in electrical, mechanical or other forms.

The above units described as separate components may be or may not be physically separated, and the components displayed as units may be or may not be physical units, that is, they may be located in one place or may be distributed on multiple network units. Part or all of the units may be selected according to actual requirements to implement the purpose of solutions of the embodiments.

Furthermore, all the functional units in various embodiments of the application may be integrated into a processing unit, or each unit may separately exist as a unit, or two or more units may be integrated into one unit. The above integrated unit may be implemented in form of hardware, or may be implemented in form of hardware plus software functional unit. It may be understood by those of ordinary skill in the art that implementations of all or part of operations of the above method embodiments may be completed by hardware related to program instructions, the foregoing program may be stored in a computer-readable storage medium, and the operations of the above method embodiments may be performed when the program is executed; and the foregoing storage medium includes various media capable of storing program codes, such as a mobile storage device, a ROM, a magnetic disk, or an optical disk, etc.

Alternatively, in the application, if the above integrated unit is implemented in form of software functional module and is sold or used as an independent product, the integrated unit may also be stored in a computer-readable storage medium. Based on such understanding, the technical solutions of the application substantially, or parts making contributions to the related art may be embodied in form of software product, and the computer software product is stored in a storage medium, and includes several instructions configured to enable a computer device (which may be a personal computer, a server, or a network device, etc.) to perform all or part of the methods described in various embodiments of the application. The foregoing storage medium includes various media capable of storing program codes, such as a mobile storage device, a ROM, a magnetic disk, or an optical disk, etc.

The above descriptions are only implementations of the application; however, the scope of protection of the application is not limited thereto. Variation or replacement easily conceived by any technician familiar with this technical field within the technical scope disclosed in the application, should fall within the scope of protection of the application.

### Industrial Applicability

The application discloses a method and apparatus for geometry processing, a device, a storage medium and a program product, the method for geometry processing includes the following operations. The primitive distribution unit acquires PC data from a geometry data stream, here the PC data includes a first label used for determining an order of the PC data in the geometry data stream. The primitive distribution unit further splits the PC data into PG data, and the primitive distribution unit distributes the PG data to the GPPs. The GPPs process the PG data to obtain PG processing results, and the GPPs output the PG processing results to the merging arbiter. The merging arbiter merges the PG processing results based on the second label, to obtain geometry output data corresponding to the PC data. With the above method, geometry processing performance of the GPU may be improved.

## Claims

1. A method for geometry processing, applied to a Graphics Processing Unit (GPU) comprising at least two Graphics Pipelines Clusters (GPCs), each of the at least two GPCs comprising a primitive distribution unit, at least two Geometry Processing Pipelines (GPPs) and a merging arbiter, the method for geometry processing comprising::
acquiring, by the primitive distribution unit, Primitive Cluster (PC) data from a geometry data stream, wherein the PC data comprises a first label used for determining an order of the PC data in the geometry data stream;
splitting, by the primitive distribution unit, the PC data into Primitive Group (PG) data, and distributing, by the primitive distribution unit, the PG data to the GPPs, wherein the PG data comprises a second label used for determining an order of the PG data in the PC data;
processing, by the GPPs, the PG data to obtain PG processing results, and outputting, by the GPPs, the PG processing results to the merging arbiter; and
merging, by the merging arbiter, the PG processing results based on the second label, to obtain geometry output data that corresponds to the PC data and is in a second order, wherein the geometry output data contains the first label corresponding to the PC data, and the first label is used for determining a first order among the geometry output data output by each of the GPCs.

2. The method for geometry processing of claim 1, wherein acquiring, by the primitive distribution unit, the PC data from the geometry data stream comprises:
reading, by the primitive distribution unit, the PC data to be processed by the GPC, from the geometry data stream.

3. The method for geometry processing of claim 2, wherein reading, by the primitive distribution unit, the PC data to be processed by the GPC, from the geometry data stream comprises:
reading, by the primitive distribution unit, the geometry data stream; and
discarding data that is not to be processed by a current GPC from the geometry data stream based on a preset PC acquisition strategy, to obtain the PC data to be processed by the GPC.

4. The method for geometry processing of claim 2, wherein reading, by the primitive distribution unit, the PC data to be processed by the GPC, from the geometry data stream comprises:
determining an address range of the PC data to be processed by the GPC, based on a preset PC acquisition strategy; and
reading the PC data to be processed by the GPC from the geometry data stream based on the address range.

5. The method for geometry processing of claim 1, wherein the GPU further comprises a global distribution unit, and
the method for geometry processing further comprises: reading, by the global distribution unit, the geometry data stream; and determining, by the global distribution unit, the PC data to be processed by each of the GPCs, from the geometry data stream based on a preset PC acquisition strategy, and distributing, by the global distribution unit, the PC data to the GPC,
correspondingly, acquiring, by the primitive distribution unit, the PC data from the geometry data stream comprises: receiving, by the primitive distribution unit, the PC data to be processed by the GPC which is sent by the global distribution unit.

6. The method for geometry processing of any one of claims 1 to 5, wherein the GPU further comprises at least one pixel processing pipeline, and the method for geometry processing further comprises:
buffering, by each of the GPCs based on the first label, the geometry output data corresponding to the PC data into a buffering unit corresponding to the GPC; and
sequentially reading, by the pixel processing pipeline based on the first label, from buffering units corresponding to the at least two GPCs respectively, the geometry output data corresponding to each of the GPCs in the first order.

7. The method for geometry processing of claim 6, wherein the GPC further comprises a chunker, and buffering, by each of the GPCs based on the first label, the geometry output data corresponding to the PC data into the buffering unit corresponding to the GPC comprises:
sequentially distributing, by the chunker based on the first label, the geometry output data corresponding to each of the GPCs, and buffering, by the chunker, the geometry output data into the buffering unit corresponding to the GPC,
wherein distributing the geometry output data corresponding to each of the GPCs, and buffering the geometry output data into the buffering unit corresponding to the GPC comprises: sequentially determining, by the chunker based on the second order, a tile corresponding to each primitive data in the geometry output data; and writing, by the chunker, each primitive data in the geometry output data into a polygon list of the tile corresponding to the primitive data, in the buffering unit corresponding to the GPC.

8. The method for geometry processing of claim 7, wherein in case that at least one target primitive data belonging to a target tile is present in the geometry output data, a polygon list of the target tile comprises the first label of the geometry output data and each target primitive data belonging to the target tile in the geometry output data,
wherein an order of each target primitive data in the polygon list is the same as the second order.

9. The method for geometry processing of claim 7, wherein sequentially reading, by the pixel processing pipeline based on the first label, from the buffering units corresponding to the at least two GPCs respectively, the geometry output data corresponding to each of the GPCs in the first order comprises:
in the buffering units corresponding to the at least two GPCs respectively, traversing, by the pixel processing pipeline, the first label in each of polygon lists corresponding to a target tile, and extracting, by the pixel processing pipeline, primitive data corresponding to a target first label from a polygon list corresponding to the target first label, until there is no primitive data in each of the polygon lists,
wherein the target first label is determined based on an order of the first label in a header of each of the polygon lists.

10. A Graphics Processing Unit (GPU), comprising at least two Graphics Pipelines Clusters (GPCs), each of the at least two GPCs comprising a primitive distribution unit, at least two Geometry Processing Pipelines (GPPs) and a merging arbiter,
wherein the primitive distribution unit is configured to acquire Primitive Cluster (PC) data from a geometry data stream, wherein the PC data comprises a first label used for determining an order of the PC data in the geometry data stream,
the primitive distribution unit is further configured to split the PC data into Primitive Group (PG) data, and distribute the PG data to the GPPs, wherein the PG data comprises a second label used for determining an order of the PG data in the PC data,
the GPPs are configured to process the PG data to obtain PG processing results, and output the PG processing results to the merging arbiter,
the merging arbiter is configured to merge the PG processing results based on the second label, to obtain geometry output data that corresponds to the PC data and is in a second order, wherein the geometry output data contains the first label corresponding to the PC data, and the first label is used for determining a first order among the geometry output data output by each of the GPCs.

11. A computer device, comprising a memory and a processor, wherein the memory has stored thereon a computer program executable on the processor, and steps of the method of any one of claims 1 to 9 are implemented when the program is executed by the processor.

12. A computer-readable storage medium, having stored thereon a computer program, wherein steps of the method of any one of claims 1 to 9 are implemented when the computer program is executed by a processor.

13. A computer program product, comprising a computer program or instructions, wherein steps of the method of any one of claims 1 to 9 are implemented when the computer program or instructions are executed by a processor.
